# EUROPEAN PATENT SPECIFICATION

(11) **EP 2 620 276 B1**
(45) Date of publication and mention of the grant of the patent: **21.03.2018**
(21) Application number: 11826814.3
(22) Date of filing: 20.09.2011
(51) Int. Cl.: B32B 15/085

(54) **INTEGRALLY EXTRUSION-MOLDED OBJECT AND BUILDING MEMBER**
INTEGRAL EXTRUSIONSGEFORMTES OBJEKT UND GEBÄUDEELEMENT
OBJET MOULÉ PAR EXTRUSION EN UNE SEULE PIÈCE ET ÉLÉMENT DE CONSTRUCTION ASSOCIÉ

(30) Priority: 21.09.2010 JP 2010210958
(43) Date of publication of application: 31.07.2013
(73) Proprietor: Kurashiki Boseki Kabushiki Kaisha, Kurashiki-shi Okayama 710-0054 (JP)
(72) Inventor: YOKOTA, Katsuhiko, Osaka-shi Osaka 541-8581 (JP); HIROTANI, Teruhiko, Neyagawa-shi Osaka 572-0823 (JP); ICHINOSE, Katsuya, Neyagawa-shi Osaka 572-0823 (JP)
(74) Representative: Hoffmann Eitle
(86) International application number: PCT/JP2011/071320
(87) International publication number: WO 2012/039369

(56) References cited:
- EP-A2- 0 078 174
- GB-A- 2 059 340
- JP-A- H1 024 974
- JP-A- S5 945 147
- JP-A- S6 126 609
- JP-A- S63 236 641
- JP-A- 2000 127 314
- JP-A- 2002 120 333
- JP-A- 2005 035 305
- JP-A- 2006 192 743
- JP-A- 2007 175 949
- US-A1- 2008 193 703

## Description

### [Art Field Related]

The present invention relates to an integral extrusion-molded item containing a metal core and a constructional member.

### [Prior Art]

An integral extrusion-molded item containing a metal core has a metal substrate, for example of aluminum, and a covering layer extrusion-coated thereon. The covering layer contains at least a thermoplastic synthetic resin, especially polyethylene, and wood flour, which have been known as composite extrusion-covering material (Patent Document 1). As such a composite extrusion-covering material contains wood flour, the covering layer shows high-quality wood-like texture.

However, the extrusion-covering materials described above had such a problem that sufficient adhesiveness was not obtained between the core and the covering layer. For example, adhesiveness decreases after long-term storage or use; adhesiveness decreases after heating and cooling are repeated; or adhesiveness decreases by contact with water. Such decrease in adhesiveness caused deficiency such as exposure of the core caused by the difference in expansion/ shrinkage rate between the core and the covering layer on temperature change and also problems, for example, that one and the other end regions of the covering layer are separated locally during production and during use in the case of an irregular crosssectional shape and the covering layer becomes easily exfoliated when the surface resin is damaged.

On the other hand, it was reported that it is possible to improve the adhesiveness between an aluminum substrate and a synthetic resin layer, in particular an acrylic resin-containing covering layer, by forming a polyester resin layer between them (Patent Document 2).

### [Patent Document]

Patent Document 1: JP-A No. 2002-120333
Patent Document 2: JP-A No. 2008-080753

### [Disclosure of Invention]

### [Technical Problems to be Solved]

However, when a wood flour-containing polyolefin resin is used as the covering layer, it was not possible to obtain sufficient adhesiveness.

An object of the present invention is to provide an integral extrusion-molded item, in which the covering layer shows sufficient adhesiveness to the metal core even made of a polyolefin resin containing wood flour, and a constructional member comprising the same.

### [Means to Solve the Problems]

The present invention relates to an integral extrusion-molded item comprising a metal core, a covering layer containing a polyolefin resin and wood flour and formed over the external surface thereof, and an adhesive layer formed between the covering layer and the core, wherein the adhesive layer contains a copolymer prepared by polymerizing at least an α-olefin and an epoxy group-containing unsaturated monomer, and also relates to a constructional member comprising the integral extrusion-molded item.

### [Effect of the Invention]

The integral extrusion-molded item and the constructional member according to the present invention, which have a particular adhesive layer between the covering layer and the core, are superior in adhesiveness between the covering layer and the adhesive layer and also between the adhesive layer and the core, even if the covering layer is made of a polyolefin resin containing wood flour. As a result, the covering layer and the core are favorably adhesive to each other and show sufficient adhesiveness even after storage or use for an extended period of time, repeated heating and cooling or contact with water. In the present invention, the presence of an unsaturated carboxylic acid in the covering layer leads to further improvement in adhesiveness between the covering layer and the adhesive layer and thus in adhesiveness between the covering layer and the core.

### [Brief Description of Drawing]

Figure 1 is a schematic view illustrating an example of the integral extrusion-molded item according to the present invention.
Figure 2 is another schematic view illustrating an example of the integral extrusion-molded item according to the present invention.
Figure 3 is a schematic view illustrating an example of the core constituting the integral extrusion-molded item according to the present invention.
Figure 4 is another schematic view illustrating an example of the core constituting the integral extrusion-molded item according to the present invention.
Figure 5 is yet another schematic view illustrating an example of the core constituting the integral extrusion-molded item according to the present invention.
Figure 6 is yet another schematic view illustrating an example of the core constituting the integral extrusion-molded item according to the present invention.
Figure 7 is a schematic crosssectional view illustrating a coextrusion-type integral extrusion-molding machine used for production of the integral extrusion-molded item according to the present invention.

### [Embodiment Carrying Out the Invention]

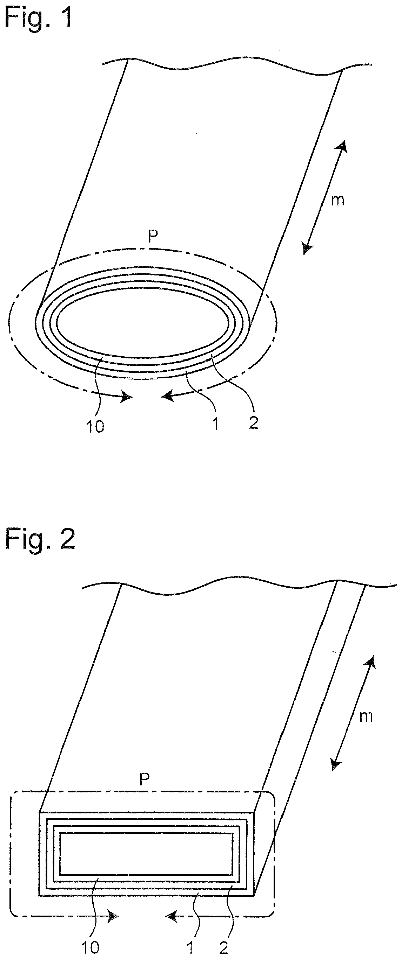

The integral extrusion-molded item according to the present invention has a core, a covering layer formed on the external surface thereof and an additional adhesive layer formed between the covering layer and the core. In detail, for example as shown in Figures 1 and 2, a covering layer 1 and an adhesive layer 2 are formed continuously on a core 10 in the lengthwise direction m and the adhesive layer 2 is formed between the covering layer 1 and the core 10. For example as shown in Figures 1 and 2, the covering layer 1 and the adhesive layer 2 may be formed continuously entirely without interruption or partially on the core 10 in the peripheral direction P of its cross section. Figures 1 and 2 are respectively schematic views of examples of the integral extrusion-molded item according to the present invention.

In the present specification, the integral extrusion molding means extruding and molding materials for adhesive layer and for covering layer respectively and simultaneously coating and integrating the layers sequentially on a core fed thereto and the product obtained by the method is called an integral extrusion-molded item.

The core 10 is made of a metal such as aluminum or an aluminum alloy, stainless steel, galvanized steel or copper. It is preferably made of aluminum or an aluminum alloy from the viewpoints of lightness and easiness of processing into a hollow or irregular shape, which are required for constructional members. The core may be in a hollow or solid shape and the entire shape is not particularly limited and may be, for example, flat plate-shaped, rod-shaped or the like. For example, a hollow or solid core of aluminum or an aluminum alloy can be prepared by extrusion molding of aluminum or aluminum alloy. In particular, extrusion-molding is useful for production of cores having various irregular-shaped cross sections, for example in the hollow shape, U shape and L shape. The material "made of aluminum," as used in the present invention, includes a material "made of an aluminum alloy." The cross section of the core is the cross section of the core in the direction perpendicular to the lengthwise direction of the core.

The aluminum core has a hollow shape, a flat plate shape or an irregular-shaped cross section, the thickness of the aluminum region is 1.1 to 3.0 mm, from the viewpoints of the rigidity and the extrusion processability of aluminum.

The overall dimension of the core in the case of a hollow or solid shape is not particularly limited and may be determined appropriately according to applications of the integral extrusion-molded item obtained. Because rigidity and surface-decorating efficiency are demanded for constructional members, the core preferably has, in addition to the thickness above, a length in the width direction of 20 mm or more, preferably 30 mm or more.

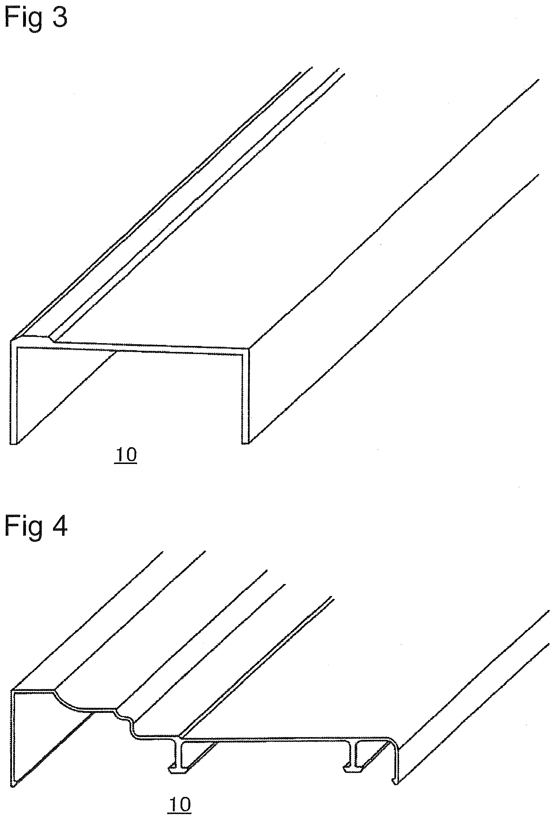

In particular when the integral extrusion-molded item is used as a constructional member, the core 10 preferably has a hollow shape as shown in Figure 1 or 2 or an irregular shape as shown in Figure 3 or 4. Figures 3 and 4 are schematic views illustrating examples the cores that can be used in production of the integral extrusion-molded item according to the present invention.

When the core has a hollow rod shape, the crosssectional shape is not particularly limited and may be, for example, approximately circular, approximately elliptic, approximately square (for example, approximately rectangular or approximately square) or the like. Cores having an approximately circular, elliptic or rectangular crosssectional shape are preferable, and those having an approximately circular or rectangular crosssectional shape are particularly preferable, from the viewpoint of handling efficiency of the constructional member. In particular, because cores having a hollow rectangular crosssectional shape bend easily under the resin pressure during integral extrusion molding, leading to deterioration of adhesiveness, they are processed effectively in the present invention in which the adhesiveness is improved.

When the core has a hollow shape, the core may have screw holes for installation of the integral extrusion-molded item in the cavity. The screw holes can be formed simultaneously when the core is formed integrally by extrusion molding.

The core is preferably subjected to knurling treatment and/or alumite treatment before the covering layer and the adhesive layer are formed as described below for further improvement of the adhesiveness between the adhesive layer and the core. When both knurling and alumite treatments are carried out, it is preferable that knurling is carried out before alumite treatment.

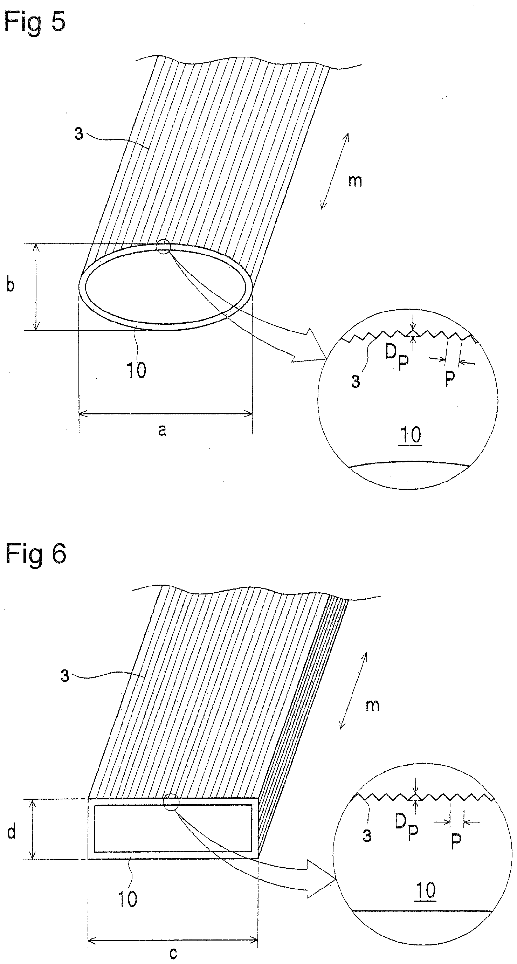

The knurling treatment, which is a processing treatment forming grooves on the external surface of the core, increases further the adhesiveness between the adhesive layer and the core. When a core is knurled, grooves are formed at least on the region for forming the adhesive layer of the external surface in the lengthwise direction. For example, the core may have grooves only in the region forming the adhesive layer or may have grooves also in the region not for forming the adhesive layer. Preferably from the viewpoint with adhesiveness to the adhesive layer, for example as shown in figures 5 and 6, the grooves 3 are formed continuously on the entire external surface of the core 10 both in the crosssectional peripheral direction and the lengthwise direction m of the core 10. In contrast to grooves and irregularities formed by embossing in the direction approximately perpendicular to the lengthwise direction of the core, the grooves 3, which are formed in the lengthwise direction m of the core, can be produced simultaneously with molding of the core and thus, more uniform grooves are formed efficiently.

In the present invention, the core may have, for example, grooves and embossed irregularities in the direction approximately perpendicular to the lengthwise direction in addition to the grooves in the lengthwise direction, but preferably has only grooves formed in the lengthwise direction from the viewpoint of productivity, because it is possible to assure favorable adhesiveness between the core and the adhesive layer only with the grooves formed in the lengthwise direction.

The depth (Dp) of the groove 3 is preferably 0.03 to 1.0 mm, more preferably 0.05 to 0.35 mm. The pitch (P) of grooves 3 (i.e., distance between the bottoms of neighboring grooves) is preferably 0.03 to 1.5 mm, more preferably 0.05 to 1.0 mm.

The depth and the pitch of grooves are averages of the values determined at any three positions per 1 m length of the core in the lengthwise direction. The measuring method is not particularly limited, but a method of using a microgauge is simple and easy. The depth may be determined by irradiation of laser beam. The depth and the pitch may also be determined by observation of the crosssectional surface under microscope.

The shape of the groove is not particularly limited. For example, the crosssectional shape of the irregularity formed by the groove may be continuous, approximately triangular protuberances and dents, as shown in figures 5 and 6, or continuous, approximately circular protuberances and dents.

It is possible to form the grooves in the lengthwise direction simultaneously with production of the core by extrusion molding. For example in extrusion molding of an aluminum core, it is possible to form desired grooves on the external surface of the core in the lengthwise direction by using, as the exit of the extruder, a particular mold having protuberances corresponding to the grooves of final product on the internal surface thereof in the lengthwise direction. Alternatively, it is also possible to form desired grooves on the external surface of the core in the lengthwise direction, by using a conventional aluminum core having no grooves and a particular ring-shaped groove-forming member having a hole in the shape identical with the core cross section and protuberances corresponding to the grooves on the internal surface of the hole in the lengthwise direction, fitting tightly the groove-forming member to one end of the core, and pushing the groove-forming member relatively to the other end of the core in that state. Both of these methods permit uniform formation of the grooves in the lengthwise direction in a relatively short period of time.

If the grooves in the lengthwise direction are formed simultaneously with extrusion molding of the aluminum core, the grooves can be produced in a shorter period of time, leading to drastic increase in productivity of the integral extrusion-molded item. In addition, the grooves are formed more uniformly, leading to drastic increase in adhesiveness to the adhesive layer.

The alumite treatment is a treatment forming an oxide film particularly on the surface of the aluminum core, which leads to further improvement of the adhesiveness between the adhesive layer and the core. The alumite treatment is a so-called anodizing process and the general principle of anodizing methods can be applied as it is. For example, it is a method of degreasing a predetermined aluminum material, electropolishing it, washing it with water, and anodizing it in an electrolytic bath. The electrolyte solution for use may be a phosphoric acid solution, a sulfuric acid solution, a sulfamic acid solution, an oxalic acid solution or the like. The anodizing process is carried out, as the aluminum material is electrolyzed as an anode in an electrolyte solution at 20 to 40°C. In common alumite treatment, sealing treatment is carried out in a downstream step. The sealing treatment is a process for prevention of the adverse effects, such as deterioration in corrosion resistance, caused by the micropores generated in the anodizing process, and methods such as treatment in pressurized steam and treatment in aqueous nickel acetate-cobalt acetate solution are used for sealing. However in the present invention, the core in the state before sealing is used, because the oxide film having micropores on the surface significantly improve in the adhesiveness with the adhesive layer.

The covering layer 1 is a resin layer at least containing a base resin and wood flour. The base resin is a polyolefin resin. The polyolefin resin is a homopolymer or a copolymer containing one or more a-olefins as its monomers. The a-olefins are, for example, a-olefins having a carbon atom number of 2 to 8, preferably 2 to 6, such as ethylene, propylene, isobutylene and hexene. Preferable α-olefin is ethylene or propylene. The polyolefin resin may contain monomers other than the α-olefin as its monomers. Examples of such other monomers include vinyl ester monomers such as vinyl acetate.

Typical examples of the polyolefin resins include polyolefins such as polyethylene, polypropylene and ethylene-propylene copolymers, ethylene vinyl acetate copolymers and the like. Preferable polyolefin resins are polyolefins, in particular, polyethylene and polypropylene.

The polyolefin resins are preferably modified with an unsaturated carboxylic acid. The unsaturated carboxylic acid-modified polyolefin resin is relatively more compatible with the wood flour present in the covering layer and thus can improve the adhesiveness between the covering layer and the adhesive layer further.

The unsaturated carboxylic acid is a compound having one or more unsaturated bonds and one or more carboxyl groups in the molecule. Typical examples of the unsaturated carboxylic acids include unsaturated monocarboxylic acids such as acrylic acid, methacrylic acid, ethacrylic acid and crotonic acid, unsaturated dicarboxylic acids such as itaconic acid, maleic acid and fumaric acid, and the derivatives thereof. The derivatives of unsaturated carboxylic acids include the chlorides, amides, esters and anhydrides of the acids described above. The esters of the acids above include methyl esters, ethyl esters, propyl esters, dimethylaminoethyl esters and the like. Favorable unsaturated carboxylic acids are unsaturated dicarboxylic acids and the anhydrides thereof, and typical examples thereof include maleic acid and maleic anhydride.

The modification with unsaturated carboxylic acid can be performed by adding an unsaturated carboxylic acid into the system during or after polymerization of the polyolefin resin above. The unsaturated carboxylic acid-modified polyolefin resin may be in the form in which the unsaturated carboxylic acid is incorporated into the main chain of the polyolefin resin in addition reaction and chemical bonds are formed between the polyolefin resin and the unsaturated carboxylic acid, in the form in which the unsaturated carboxylic acid is dispersed in the polyolefin resin without chemical bonds being formed between the polyolefin resin and the unsaturated carboxylic acid, or in the form in combination thereof.

The content of the unsaturated carboxylic acid in the unsaturated carboxylic acid-modified polyolefin resin is 0.1 to 15 wt%, particularly 0.1 to 10 wt%, with respect to the total amount of the monomers for the unsaturated carboxylic acid-modified polyolefin resin. Two or more unsaturated carboxylic acids may be contained therein and, in such a case, the total content of them is in the range above.

The polyolefin resin preferably has a melting point of 165°C or lower, particularly of 125 to 165°C. The MFR (melt flow rate) of the polyolefin resin is preferably 3 to 25 g/10 min, particularly 3 to 15 g/10 min, from the viewpoint of integral extrusion molding.

In the present description, the melting point can be determined by using a differential scanning calorimeter commonly used, for example, by measuring the peak value of the endothermic peak associated with the phase transition when approximately 5 mg of a sample is heated under nitrogen environment at a heating rate of 10°C/min. The MFR is a value at 190°C and a load of 2.16 kgf, which can be determined according to JIS K 7210.

The polyolefin resin can be prepared by a known method, such as suspension polymerization or solution polymerization, and is also available as a commercial product. In particular, the polyolefin for use as the polyolefin resin may be a recycled product derived from discarded polyolefin products. Use of such a recycled product is favorable because the load on environment decreases. Commercial products of the unsaturated carboxylic acid-modified polyolefin resins that can be used include, for example, Yumex 1010 (produced by Sanyo Chemical Industries) and the like.

The covering layer may contain an unsaturated carboxylic acid as another component for the polyolefin resin above. The unsaturated carboxylic acid contained as the another component for the polyolefin resin can improve the compatibility of the polyolefin resin with the wood flour, consequently leading to further improvement of the adhesiveness between the covering layer and the adhesive layer. In particular when a polyolefin is used as the polyolefin resin, addition of an unsaturated carboxylic acid to the covering layer as another component for the polyolefin is effective for further improvement of the adhesiveness between the covering layer and the adhesive layer.

The unsaturated carboxylic acid contained as another component for the polyolefin resin for use may be a compound similar to the unsaturated carboxylic acid for the unsaturated carboxylic acid-modified polyolefin resin. The preferable unsaturated carboxylic acid is an unsaturated dicarboxylic acid or the anhydride thereof. Typical examples thereof include maleic acid and maleic anhydride.

The content of the unsaturated carboxylic acid contained as another component for the polyolefin resin is preferably 0.2 to 10 wt%, more preferably 1.0 to 10 wt% with respect to the polyolefin resin. Two or more unsaturated carboxylic acids may be contained and, in such a case, the total content of them is preferably in the range above.

In the present invention, a resin other than polyolefin resins may be used as the base resin. The other resin is, for example, an acrylonitrile-butadiene-styrene resin.

Pulverized powders, saw dusts and the like of woods (such as Cryptomeria, Hinoki cypress and Tsuga heterophylla) and also unused and discarded woods thereof are used often as the wood flour and those having a grain size of 10 to 500 mesh can be used, but those of about 60 to 100 mesh are more preferable. Use of pulverized powder of unused and discarded woods as the wood flour is preferable because of reduction of the load on the environment.

The content of the wood flour is 5 to 50 wt parts, preferably 10 to 40 wt parts, with respect to 100 wt parts of the polyolefin resin.

The covering layer may be a single layer or a composite layer having 2 or more layers. The composite covering layer is a composite layer having two or more layers integrally formed in the range described above.

The thickness of the covering layer is 0.7 to 5 mm from the viewpoints of adhesiveness, appearance and productivity. The thickness of the covering layer is preferably 1 to 3 mm, preferably 1.5 to 2.5 mm, for further improvement of the wood-like texture in touch and the adhesiveness of the covering layer. When the covering layer is a multi-layer type, the total thickness is in the range above.

The covering layer may be in the form of a so-called non-expanded foam or a low-expansion foam at an expansion ratio of 5 times or less, particularly twice or less.

For improvement of various physical properties, the covering layer may contain various additives that have been used in synthetic resins, such as colorants, fillers, ultraviolet absorbents, antistatic agents, matting agents, seeding agents, mica powder, organic fibers, vermiculite powder and glass chips.

The colorants that can be used include known inorganic or organic pigments. The content of the colorants is preferably 1 to 4 wt% with respect to the polyolefin resin.

Examples of the fillers that can be used include calcium carbonate, talc and the like. The content of the filler is preferably 5 to 30 wt% with respect to the polyolefin resin.

The adhesive layer 2 is a resin layer containing an epoxy-containing polyolefin resin. The epoxy group-containing polyolefin resin is a copolymer prepared by polymerization of at least an α-olefin and an epoxy group-containing unsaturated monomer. When the epoxy group-containing polyolefin resin is used, the adhesiveness between the adhesive layer and the covering layer and also the adhesiveness between the adhesive layer and the core are improved, consequently leading to improvement of the adhesiveness of the covering layer to the core. In particular, the improvement of the adhesiveness between the adhesive layer and the covering layer is probably because the epoxy groups in the adhesive layer and the hydroxyl groups of the cellulose constituting the wood flour in the covering layer react with each other, forming chemical bonds (ether bonds).

In the present invention, the further improvement in the adhesiveness between the adhesive layer and the covering layer obtained by making an unsaturated carboxylic acid contained in the covering layer is probably achieved by the chemical bonds (ester bonds) formed in reaction of the epoxy groups in the adhesive layer and the carboxyl groups of the unsaturated carboxylic acid in the covering layer.

The α-olefin constituting the epoxy group-containing polyolefin resin is, for example, a monomer similar to the α-olefin constituting the polyolefin resin. Preferable a-olefins are ethylene and propylene.

The epoxy group-containing unsaturated monomer is a compound having one or more unsaturated bonds and one or more epoxy groups in the molecule. As such, for example, a glycidyl (meth)acrylate such as glycidyl acrylate or glycidyl methacrylate is exemplified. Glycidyl (meth)acrylate is particularly preferable. Glycidyl (meth)acrylate is understood to mean that it includes glycidyl acrylate and glycidyl methacrylate.

The epoxy group-containing polyolefin resin may contain monomers other than the α-olefin and the epoxy group-containing unsaturated monomer as its monomers. Examples of such other monomers include vinyl ester monomers such as vinyl acetate; acrylic monomers such as methyl acrylate, ethyl acrylate, propyl acrylate, methyl methacrylate, ethyl methacrylate and propyl methacrylate; styrene-based monomers such as styrene; halogenated vinyl monomers such as vinyl chloride and the like. The other monomer favorably used is one or more monomers selected from the group consisting of vinyl ester monomers and acrylic monomers, preferably a vinyl ester monomer or an acrylic monomer. A favorable vinyl ester monomer is vinyl acetate. A favorable acrylic monomer is methyl acrylate.

Typical examples of the epoxy group-containing polyolefin resins include the following copolymers:
(1) copolymer of α-olefin - an epoxy group-containing unsaturated monomer;
(2) copolymer of α-olefin - an epoxy group-containing unsaturated monomer - a vinyl ester monomer;
(3) copolymer of α-olefin - an epoxy group-containing unsaturated monomer - and an acrylic monomer;
(4) copolymer of α-olefin - epoxy group-containing unsaturated monomer, and a styrene-based monomer;
(5) copolymer of α-olefin - an epoxy group-containing unsaturated monomer - a halogenated vinyl monomer; and
(6) copolymer of α-olefin - an epoxy group-containing unsaturated monomer - a vinyl ester monomer - an acrylic monomer.

Among the specific examples above, copolymers (1), (2), (3) and (6) are preferable, and copolymers (1), (2) and (3) are more preferable, and copolymers (2) are most preferable.

The content of the a-olefins in the epoxy group-containing polyolefin resin is preferably 60 to 95 wt%, more preferably 75 to 90 wt%, with respect to all the monomer components in the resin for improvement of the adhesiveness between the covering layer and the adhesive layer and the adhesiveness between the adhesive layer and the core. Two or more a-olefins may be used in combination and, in such a case, the total content of them is in the range above.

The content of the epoxy group-containing unsaturated monomer in the epoxy group-containing polyolefin resin is preferably 3 to 30 wt%, more preferably 10 to 20 wt%, with respect to all the monomer components in the resin for improvement of the adhesiveness between the covering layer and the adhesive layer and the adhesiveness between the adhesive layer and the core. Two or more epoxy group-containing unsaturated monomers may be used in combination and, in such a case, the total content of them is in the range above.

The content of the other monomers in the epoxy group-containing polyolefin resin is preferably 30 wt% or less, more preferably 10 wt% or less, with respect to all the monomer components in the resin. Two or more other monomers may be used in combination and, in such a case, the total content of them is in the range above.

The epoxy group-containing polyolefin resin has preferably a melting point of 50 to 105°C, particularly 90 to 100°C, from the viewpoints of heat resistance and extrusion-molding efficiency. The epoxy group-containing polyolefin resin has a MFR of preferably 1 to 20 g/10 min, particularly preferably 3 to 10 g/10 min from the viewpoint of integral extrusion molding.

The epoxy group-containing polyolefin resin can be prepared by a known method, such as suspension polymerization or solution polymerization, or is available as a commercial product.

The commercial products of the epoxy group-containing polyolefin resins include, for example, Bond Fast®7B (produced by Sumitomo Chemical Co., Ltd.), Bond Fast®7M (produced by Sumitomo Chemical Co., Ltd.) and the like.

In the present invention, there may be resins other than the epoxy-containing polyolefin resin present in the adhesive layer in an amount in such a range that does not impair the adhesiveness.

The thickness of the adhesive layer is 0.05 to 0.5mm, more preferably 0.1 to 0.3mm, from the viewpoint of productivity and adhesiveness.

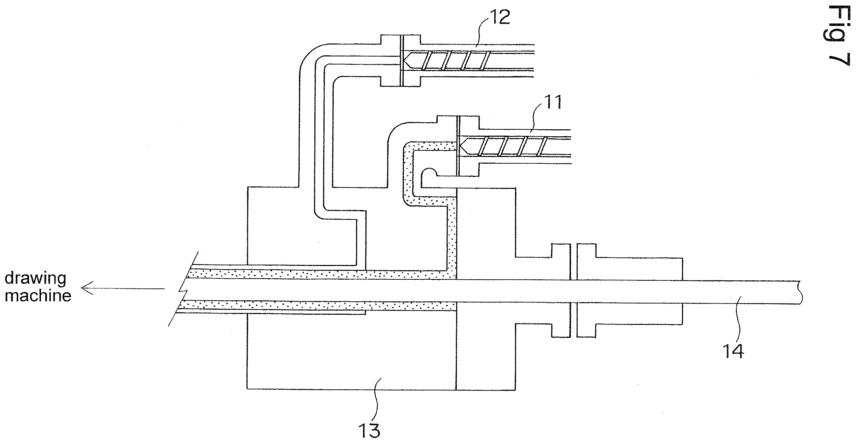

The integral extrusion-molded item according to the present invention is produced by a so-called integrated extrusion method of forming a covering layer and an adhesive layer by extrusion molding and simultaneously integrating the covering layer and the adhesive layer with the core for the reasons of productivity, production of long-length products and consistency in the properties of the products. For example in a coextrusion-type integrated extrusion-molding machine as shown in Figure 7, resins extruded from the respective extruders (11 and 12 in Figure 7), in which the materials for respective resin layers are melt-kneaded, are laminated in a dice 13 and simultaneously applied on a core 14 sequentially as integrated. After integration, the composite is normally cooled and cut into a product with a desired size. Although two extruders are used in Figure 7, the number of the extruders is not limited thereto, and the extruders may be installed in an appropriate number according to the number of the covering layers.

In the integral extrusion-molded item according to the present invention, the entire external surface of the core may not be covered with the adhesive layer and the covering layer. For example when a core 10 having an approximately rectangular cross section as shown in Figure 2 is used, the top and bottom faces may be coated with the adhesive layer and the covering layer, while the side walls remain uncoated with the core being exposed. In the case of constructional members, those carrying an adhesive layer and a covering layer only in the region that appears externally are also included in the scope of the present invention.

### [Example]

### [Cores]

### (Core A)

A hollow aluminum core having an approximately rectangular cross section as shown in Figure 2 was prepared as a hollow core by extrusion molding. The thickness of the aluminum portion of the core was uniformly 1.2 mm. The cross section has a length of 39 mm in the width direction and a length of 14 mm in the height direction and the length in the lengthwise direction was 3000 mm. Grooves extending in the lengthwise direction were formed on the aluminum core by knurling and an oxide film was formed thereon by alumite treatment (without sealing). The groove pitch was 0.5 mm and the groove depth was 0.1 mm. The alumite treatment was performed by sulfuric acid method.

### (Core B)

An irregular-shaped aluminum core having an approximately U-shaped cross section as shown in Figure 3 was prepared as an irregular-shaped core by extrusion molding. The thickness of the aluminum portion of the core was uniformly 1.2 mm. The cross section had a length of 150 mm in the width direction and a length of 50 mm in the height direction and the length in the lengthwise direction was 3000 mm. Grooves extending in the lengthwise direction were formed on the aluminum core by knurling and an oxide film was formed thereon by alumite treatment (without sealing). The groove pitch was 0.5 mm and the groove depth was 0.1 mm. The alumite treatment was performed by sulfuric acid method.

### (Core C)

Core C was prepared in a manner similar to core A, except that no knurling was performed.

### [Pellets for covering layer]

### (Pellet A)

30 wt parts of wood flour (particle diameter: 100 mesh or less), 5.2 wt parts of a brown colorant, and 15 wt parts of a filler (talc) were blended with 100 wt parts of a maleic acid-modified polypropylene resin (maleic acid content: about 2 wt%, melting point: 150°C, MFR: about 10 g/min). The mixture was melted, extruded, cooled and then pulverized coarsely to give pellets.

### (Pellet B)

30 wt parts of wood flour (particle diameter: 100 mesh or less), 5.2 wt parts of a brown colorant, and 15 wt parts of a filler (talc) were blended with 100 wt parts of polypropylene (melting point: 150°C, MFR: about 10 g/min, maleic acid-free). The mixture was melted, extruded, cooled and then pulverized coarsely to give pellets.

### [Materials for adhesive layer]

(1) The following materials were used as the epoxy group-containing polyolefin resins:
   Bond First®7B (produced by Sumitomo Chemical Co., Ltd., ethylene-glycidyl methacrylate-vinyl acetate (copolymerization ratio (by weight) 83: 12: 5), MFR: 7 g/ 10min, melting point: 95°C);
   Bond First®7M (produced by Sumitomo Chemical Co., Ltd., ethylene-glycidyl methacrylate-methyl acrylate (copolymerization ratio (by weight) 67: 6: 27), MFR: 7 g/10min, melting point: 52°C).
(2) The following material was used as the polyester resin containing no epoxy group.
   ARONMELT® PES-114EE (produced by Toagosei Co., Ltd., MFR: 35 g/10 min, melting point: 115°C).
(3) The following material was used as the polyolefin resin containing no epoxy group.
   Nucrel® N1525 (produced by Du Pont-Mitsui Polychemicals, MFR: 25 g/10 min, melting point: 93°C).

### [Preparative method for test samples]

### (Examples 1 to 8 and Comparative Examples 1 to 3)

Integral extrusion molded items were produced by using a coextrusion-type integrated extrusion-molding machine. In detail, the materials shown in Table 1 for the adhesive layer and the covering layer were extruded respectively from extruders 11 and 12 and simultaneously applied on an aluminum core 10 in a dice 13, to give an integral extrusion-molded item having an adhesive layer and a covering layer over the entire external surface of the aluminum core in the peripheral direction. The conditions for the extrusion and the core used were as follows:
Extruder 11: 40ϕ, uniaxial extruder (extrusion temperature: about 140°C)
Extruder 12: 50ϕ, uniaxial extruder (extrusion temperature: about 165°C)
The aluminum core was preheated (at about 100°C) immediately before introduction into the dice.

### [Test method]

### (Durability of adhesiveness)

The durability of adhesiveness was evaluated by an accelerated test.

A sample was left under an environment at 70°C and 95% RH for 30 days and subjected to an adhesiveness test according to 8.5.2 Cross Cut test for tape of JIS K5400:1990. In detail, cross cuts were formed on the sample surface. The cross cuts were formed with a cutter knife and the distance between the cross cuts formed with the cutter knife was 2 mm and the number of all squares formed was 25. A tape was applied and peeled off according to the JIS method. In the criteria described below, n is the number of the squares that were not separated. The adhesiveness test was performed in the central region of the integral extrusion-molded item in the lengthwise direction. If one square was separated, the integral extrusion-molded item was considered not valuable for shipping.
○: n=25 (best);
×: n<=24 (unsatisfactory);
××: No test was performed as the sample was defective in adhesiveness in the production stage.

### (Heat-shock resistance of adhesiveness)

The heat-shock resistance of adhesiveness was determined in the following thermal cycle test.

A sample was subjected to a total of 50 cycles of cooling at -10°C for 2 hours and heating at 80°C for 2 hours. Defects in appearance on the sample surface, such as local separation, exfoliation and cracking, were examined.
○: Favorable appearance (favorable);
Δ: Slight deterioration in appearance (no practical problem) (good);
×: Deterioration in appearance such as local separation and exfoliation (unsatisfactory);
××: No test was performed, as the sample was defective in adhesiveness in the production stage (unsatisfactory).

### (Water-resistance of adhesiveness)

The water-resistance of adhesiveness was determined in a water absorption test.

A sample was immersed in water at 20°C for 30 days and defects in appearance on the sample surface, such as local separation, exfoliation and cracking, were examined.
○: Favorable appearance (favorable);
Δ: Slight deterioration in appearance (no
   practical problem) (good);
× Deterioration in appearance such as local separation and exfoliation (unsatisfactory);
×× No test was performed, as the sample was defective in adhesiveness in the production stage (unsatisfactory).

**[Table 1]**

| | Components blended (parts by weight) | Example 1 | Example 2 | Example 3 | Example 4 | Example 5 | Example 6 | Example 7 | Example 8 | Comparative Example 1 | Comparative Example 2 | Comparative Example 3⁽³⁾ |
|---|---|---|---|---|---|---|---|---|---|---|---|---|
| Materials for covering layer | Pellet A for covering layer | 100 | 100 | 100 | 0 | 0 | 100 | 100 | 100 | 100 | 100 | 100 |
| | Pellet B for covering layer | 0 | 0 | 0 | 100 | 100 | 0 | 0 | 0 | 0 | 0 | 0 |
| | Maleic acid | 0 | 0 | 0 | 2 | 0 | 0 | 0 | 0 | 0 | 0 | 0 |
| Materials for adhesive layer | Bond Fast 7B⁽¹⁾ | 0 | 100 | 100 | 100 | 100 | 0 | 100 | 100 | 0 | 0 | 0 |
| | Bond Fast 7M⁽¹⁾ | 100 | 0 | 0 | 0 | 0 | 100 | 0 | 0 | 0 | 0 | 0 |
| | ARONMELT PES-114EE⁽²⁾ | 0 | 0 | 0 | 0 | 0 | 0 | 0 | 0 | 100 | 0 | 0 |
| | Nucrel N1525⁽²⁾ | 0 | 0 | 0 | 0 | 0 | 0 | 0 | 0 | 0 | 100 | 0 |
| Kind of core | | c | A | B | A | A | A | C | C | A | A | A |
| Thickness (covering layer/adhesive layer) (mm) | | 0.3/0.2 | 1.8/0.2 | 1.8/0.2 | 1.8/0.2 | 1.8/0.2 | 1.8/0.2 | 1.8/0.2 | 0.3/0.2 | 1.8/0.2 | 1.8/0.2 | 1.8/0 |
| Durability of adhesiveness | | ○ | ○ | ○ | ○ | ○ | ○ | ○ | ○ | ×× | ×× | ×× |
| Heat shock-resistance of adhesiveness | | ○ | ○ | ○ | ○ | Δ | Δ | ○ | ○ | ×× | ×× | ×× |
| Water-resistance of adhesiveness | | ○ | ○ | ○ | ○ | ○ | ○ | ○ | ○ | ×× | ×× | ×× |

| | | | | | | | | | | | | |
|---|---|---|---|---|---|---|---|---|---|---|---|---|
| (1) epoxy group-containing polyolefin resin (2) non-epoxy group-containing polyester or polyolefin resin (3) No adhesive layer was formed in Comparative Example 3. | | | | | | | | | | | | |

### [Industrial Applicability]

The integral extrusion-molded item containing a metal core according to the present invention is useful as constructional members, such as decorative materials for construction, handrails for construction, window grates for crime prevention, deck materials and balcony louvers, and materials for furniture, utensils and illumination apparatuses.

### [Explanation of Numerals]

1: covering layer
2: adhesive layer
3: groove
10: 14: core
11: 12: extruder
13: dice

## Claims

1. A constructional member comprising an integral extrusion-molded item, the integral extrusion-molded item comprising a metal core, a covering layer containing a polyolefin resin and wood flour and formed over the external surface of the core, and an adhesive layer formed between the covering layer and the core,
wherein the adhesive layer comprises a copolymer prepared by polymerizing at least an α-olefin and an epoxy group-containing unsaturated monomer,
wherein the metal core is an aluminum core having a hollow shape, a flat plate shape or an irregular-shaped cross section and a thickness of 1.1 to 3.0 mm,
wherein the covering layer has a thickness of 0.7 to 5 mm and contains 5 to 50 parts by weight of the wood flour relative to 100 parts by weight of the polyolefin resin, and
wherein the adhesive layer has a thickness of 0.05 to 0.5 mm and is formed by extrusion molding simultaneously with extrusion molding of the covering layer.

2. The constructional member according to Claim 1, in which the polyolefin resin contained in the covering layer is an unsaturated carboxylic acid-modified polyolefin resin.

3. The constructional member according to Claim 1, in which the covering layer further contains an unsaturated carboxylic acid or a derivative thereof.

4. The constructional member according to any one of Claims 1 to 3, in which the adhesive layer has a thickness of 0.1 to 0.3 mm.

5. The constructional member according to any one of Claims 1 to 4, in which the core has an oxide film on the surface thereof.

6. The constructional member according to any one of Claims 1 to 5, in which the core has grooves of depth of 0.03 ∼ 1.0 mm at least in the region for forming the adhesive layer of the external surface in the lengthwise direction.

## Patentansprüche

1. Bauteil, das einen integral extrusionsgeformten Gegenstand umfasst, wobei der integral extrusionsgeformte Gegenstand einen Metallkern, eine Deckschicht, die ein Polyolefinharz und Holzmehl enthält und über der Außenfläche des Kerns ausgebildet ist, und eine zwischen der Deckschicht und dem Kern ausgebildete Haftschicht umfasst,
wobei die Haftschicht ein Copolymer umfasst, das durch Polymerisieren von mindestens einem α-Olefin und einem Epoxidgruppen-haltigen ungesättigten Monomer hergestellt wurde,
wobei der Metallkern ein Aluminiumkern ist, der eine hohle Form, eine flache Plattenform oder einen unregelmäßig geformten Querschnitt und eine Dicke von 1,1 bis 3,0 mm aufweist,
wobei die Deckschicht eine Dicke von 0,7 bis 5 mm aufweist und 5 bis 50 Gewichtsteile des Holzmehls in Bezug auf 100 Gewichtsteile des Polyolefinharzes enthält, und
wobei die Haftschicht eine Dicke von 0,05 bis 0,5 mm aufweist und durch Extrusionsformen gleichzeitig mit Extrusionsformen der Deckschicht gebildet ist.

2. Bauteil gemäß Anspruch 1, in dem das Polyolefinharz, das in der Deckschicht enthalten ist, ein Polyolefinharz ist, das mit einer ungesättigten Carbonsäure modifiziert ist.

3. Bauteil gemäß Anspruch 1, in dem die Deckschicht ferner eine ungesättigte Carbonsäure oder ein Derivat davon enthält.

4. Bauteil gemäß mindestens einem der Ansprüche 1 bis 3, in dem die Haftschicht eine Dicke von 0,1 bis 0,3 mm aufweist.

5. Bauteil gemäß mindestens einem der Ansprüche 1 bis 4, in dem der Kern einen Oxidfilm auf seiner Oberfläche aufweist.

6. Bauteil gemäß mindestens einem der Ansprüche 1 bis 5, in dem der Kern mindestens in dem Bereich zur Bildung der Haftschicht der Außenfläche in der Längsrichtung Nuten einer Tiefe von 0,03 ∼ 1,0 mm aufweist.

## Revendications

1. Élément de construction comprenant un élément moulé par extrusion en une seule pièce, l'élément moulé par extrusion en une seule pièce comprenant un noyau métallique, une couche de protection contenant une résine polyoléfine et de la farine de bois et formée sur la surface externe du noyau, et une couche adhésive formée entre la couche de protection et le noyau,
dans lequel la couche adhésive comprend un copolymère préparé par polymérisation d'au moins une α-oléfine et un monomère insaturé à groupe époxy,
dans lequel le noyau métallique est un noyau d'aluminium ayant une forme creuse, une forme de plaque plate ou une section en coupe de forme irrégulière et une épaisseur de 1.1 à 3.0 mm,
dans lequel la couche de protection a une épaisseur de 0.7 à 5 mm et contient de 5 à 50 parties en poids de la farine de bois par rapport à 100 parties en poids de la résine polyoléfine, et
dans lequel la couche adhésive a une épaisseur de 0.05 à 0.5 mm et est formé par moulage par extrusion simultanément avec le moulage par extrusion de la couche de protection.

2. L'élément de construction selon la Revendication 1, dans lequel la résine polyoléfine contenue dans la couche de protection est une résine polyoléfine modifiée par un acide carboxylique insaturé.

3. L'élément de construction selon la Revendication 1, dans lequel la couche de protection contient en outre un acide carboxylique insaturé ou un dérivatif de celui-ci.

4. L'élément de construction selon l'une quelconque des Revendications 1 à 3, dans lequel la couche adhésive a une épaisseur de 0.1 à 0.3 mm.

5. L'élément de construction selon l'une quelconque des Revendications 1 à 4, dans lequel le noyau a un film d'oxyde sur la surface de celui-ci.

6. L'élément de construction selon l'une quelconque des Revendications 1 à 5, dans lequel le noyau a des rainures d'une profondeur de 0.03 ∼ 1.0 mm au moins dans la région pour former la couche adhésive de la surface externe dans la direction de la longueur.
